# FASCICULE DE BREVET EUROPEEN

(11) **EP 3 083 315 B1**
(45) Date de publication et mention de la délivrance du brevet: **03.06.2020**
(21) Numéro de dépôt: 14828185.0
(22) Date de dépôt: 18.12.2014
(51) Int. Cl.: B60K 35/00, G06F 3/041

(54) **DISPOSITIF D'AFFICHAGE DESTINÉ NOTAMMENT À UN VÉHICULE AUTOMOBILE**
ANZEIGEVORRICHTUNG, INSBESONDERE FÜR EIN KRAFTFAHRZEUG
DISPLAY DEVICE INTENTED NOTABLY FOR A MOTOR VEHICLE

(30) Priorité: 20.12.2013 FR 1303043
(43) Date de publication de la demande: 26.10.2016
(73) Titulaire: Valeo Systemes Thermiques, 78320 Le Mesnil Saint Denis (FR)
(72) Inventeur: BERAUD, Henry, F-94300 Vincennes (FR)
(74) Mandataire: Delplanque, Arnaud
(86) Numéro de dépôt international: PCT/FR2014/000294
(87) Numéro de publication internationale: WO 2015/092170

(56) Documents cités:
- WO-A1-2012/131192
- KR-A- 20090 064 147

## Description

La présente invention concerne un dispositif d'affichage destiné notamment à un véhicule automobile tel qu'une voiture ou un camion. En particulier, l'invention concerne un dispositif d'affichage pour un système de navigation ou un ordinateur de bord d'un véhicule automobile. L'invention se rapporte également à une planche de bord d'un véhicule automobile comprenant un dispositif d'affichage selon l'invention.

De plus en plus de véhicules automobiles sont équipés d'interfaces homme machine comprenant un dispositif d'affichage avec un pavé tactile. Ce type de dispositif permet de commander des fonctions dans le véhicule automobile et d'afficher des informations utiles à l'utilisateur.

Ce type de dispositif d'affichage comprend au moins un écran d'affichage et un pavé tactile. L'écran d'affichage est généralement fixé à un boitier.

L'écran d'affichage comprend typiquement une surface d'affichage adressée au moyen d'éléments électroniques. Les éléments électroniques sont disposés sur la partie latérale de l'écran d'affichage et généralement sont cachés au moyen d'un cadre métallique qui maintient l'ensemble. Ces éléments électroniques encore appelés « parties techniques » peuvent comprendre des pistes électriques, des câbles soudés, et/ou des circuits électroniques.

Dans les configurations usuelles, une partie du cadre métallique s'étend sur la surface avant de l'écran d'affichage. Il n'est pas souhaitable, en particulier pour des raisons d'esthétisme, que le cadre métallique soit visible par l'utilisateur du dispositif d'affichage.

Certains dispositifs d'affichage comprennent un boîtier dont les bords latéraux présentent un cadre enjoliveur additionnel recouvrant les bords latéraux de la dalle d'affichage masquant ainsi le cadre métallique ou un autre élément technique de l'écran d'affichage.

D'autres dispositifs d'affichage de l'art antérieur comprennent un unique masque opaque, généralement noir, cachant le cadre métallique.

Cependant, ce type de cadre enjoliveur additionnel ou de masque unique s'étend en direction du centre de la surface avant de l'écran d'affichage de manière importante et masque également une partie de l'image pour les utilisateurs. En particulier, ceci est le cas pour les utilisateurs qui sont positionnés de biais par rapport à la face avant du dispositif d'affichage.

La position de biais étant la position la plus fréquente pour un utilisateur dans le cadre d'un véhicule automobile. A titre d'exemple, le document WO2012131192 décrit un tel agencement.

Le but de l'invention est de proposer un dispositif d'affichage permettant de masquer les éléments techniques et/ou le cadre métallique de l'écran d'affichage tout en offrant à l'utilisateur la possibilité de voir l'ensemble de la surface d'affichage de l'écran d'affichage.

A cet effet, l'invention porte sur un dispositif d'affichage destiné notamment à un véhicule automobile, comprenant :
- un écran d'affichage,
- un pavé tactile disposé devant l'écran d'affichage,
- un cadre latéral disposé sur une partie de la surface avant de l'écran d'affichage,
- un premier masque opaque disposé entre le pavé tactile et le cadre latéral et s'étendant en direction du centre de la surface avant de l'écran d'affichage au-delà du cadre latéral de sorte à masquer ledit cadre latéral,
- un deuxième masque opaque disposé devant le pavé tactile et masquant une partie latérale de la surface avant du pavé tactile disposée devant le premier masque,
dans lequel le premier masque s'étend en direction du centre de la surface avant de l'écran au-delà du deuxième masque.

Avantageusement, l'utilisation de deux masques décalés l'un de l'autre permet de masquer le cadre latéral tout en permettant à l'utilisateur de voir l'ensemble de la surface d'affichage de l'écran d'affichage. Pour obtenir un masquage équivalent avec un unique masque, ledit masque devrait être placé devant le pavé tactile i.e. : plus loin du cadre latéral que le premier masque selon l'invention, et s'étendrait donc plus loin en direction du centre de la surface avant de l'écran que le premier masque selon l'invention. Le masque unique masquerait donc une partie de l'image de l'écran.

Le dispositif selon l'invention peut également comprendre une ou plusieurs des caractéristiques ci-dessous, considérées individuellement ou selon toutes les combinaisons techniquement possibles :
- la surface avant de l'écran d'affichage, la surface avant du pavé tactile et les premier et deuxième masques sont sensiblement plans et parallèles entre eux ; et/ou
- selon au moins une section du dispositif d'affichage, la droite reliant le point du premier masque le plus proche du centre de la surface avant de l'écran d'affichage et le point du deuxième masque le plus proche du centre de la surface avant de l'écran d'affichage forme avec la normale à la surface avant de l'écran au niveau du point du premier masque le plus proche du centre de la surface avant de l'écran d'affichage un angle supérieur ou égal à 10° et inférieur ou égal à 55°; et/ou

- selon au moins une section du dispositif d'affichage, la droite reliant le point du premier masque le plus proche du centre de la surface avant de l'écran d'affichage et le point du cadre latéral le plus proche du centre de la surface avant de l'écran d'affichage forme avec la normale à la surface avant de l'écran au niveau du point du premier masque le plus proche du centre de la surface avant de l'écran d'affichage un angle supérieur ou égal à 10° et inférieur ou égal à 55° ;
- le dispositif d'affichage comprend en outre un boîtier auquel l'écran d'affichage est fixé ; et/ou
- le deuxième masque est disposé de sorte à masquer au moins une partie du boîtier ; et/ou
- le pavé tactile est de type capacitif ou résistif ; et/ou
- le dispositif d'affichage comprend en outre une plaque transparente disposée sur le deuxième masque et la face avant du pavé tactile ; et/ou
- les masques opaques sont déposés par sérigraphie sur vitre ; et/ou- le deuxième masque opaque est déposé par sérigraphie sur la plaque transparente ; et/ou
- le premier masque est déposé par sérigraphie sur la face arrière du pavé tactile.

Le dispositif selon l'invention peut également comprendre une ou plusieurs des caractéristiques ci-dessous, considérées individuellement ou selon toutes les combinaisons techniquement possibles :
- le dispositif comprend en outre un deuxième masque opaque disposé devant le pavé tactile et masquant une partie latérale de la surface avant du pavé tactile disposée devant le premier masque, les premier et deuxième masques s'étendent sensiblement de la même manière en direction du centre de la surface avant de l'écran au-delà du cadre latérale ; et/ou
- le premier masque s'étend en direction du centre de la surface avant de l'écran au-delà du deuxième masque ; et/ou
- la surface avant de l'écran d'affichage, la surface avant du pavé tactile et les premier et deuxième masques sont sensiblement plans et parallèles entre eux ; et/ou
- selon au moins une section du dispositif d'affichage, la droite reliant le point du premier masque le plus proche du centre de la surface avant de l'écran d'affichage et le point du deuxième masque le plus proche du centre de la surface avant de l'écran d'affichage forme avec la normale à la surface avant de l'écran au niveau du point du premier masque le plus proche du centre de la surface avant de l'écran d'affichage un angle supérieur ou égal à 10° et inférieur ou égal à 55°; et/ou
- selon au moins une section du dispositif d'affichage, la droite reliant le point du premier masque le plus proche du centre de la surface avant de l'écran d'affichage et le point du cadre latéral le plus proche du centre de la surface avant de l'écran d'affichage forme avec la normale à la surface avant de l'écran au niveau du point du premier masque le plus proche du centre de la surface avant de l'écran d'affichage un angle supérieur ou égal à 10° et inférieur ou égal à 55° ;
- le dispositif d'affichage comprend en outre un boîtier auquel l'écran d'affichage est fixé ; et/ou
- le deuxième masque est disposé de sorte à masquer au moins une partie du boîtier ; et/ou
- le pavé tactile est de type capacitif ou résistif.

L'invention se rapporte également à une planche de bord d'un véhicule automobile comprenant un dispositif d'affichage selon l'invention.

L'invention sera mieux comprise à la lecture de la description qui va suivre donnée à titre d'exemple non limitatif de mise en œuvre de celle-ci, et à l'examen des dessins annexés sur lesquels :
- la figure 1 illustre une vue de face d'un dispositif selon l'invention ; et
- la figure 2 illustre une vue en coupe selon l'axe II-II du dispositif d'affichage de la figure 2.

Au sens de l'invention, on entend par « surface avant » d'un élément du dispositif d'affichage la surface dudit élément la plus proche de l'utilisateur final du dispositif d'affichage en utilisation.

Au sens de l'invention, un premier élément est situé « devant » un deuxième élément lorsque le premier élément est plus proche de l'utilisateur final du dispositif d'affichage que le deuxième élément en utilisation.

Au sens de l'invention, on entend par « partie latérale d'une surface » la partie située sur les côtés de cette surface, autrement dit la partie la plus proche du périmètre de cette surface, par opposition à la partie centrale de la surface située du côté du centre de la surface.

Au sens de l'invention, on entend par «centre d'une surface » le centre du cercle inscrit ou le centre du cercle circonscrit au périmètre de ladite surface.

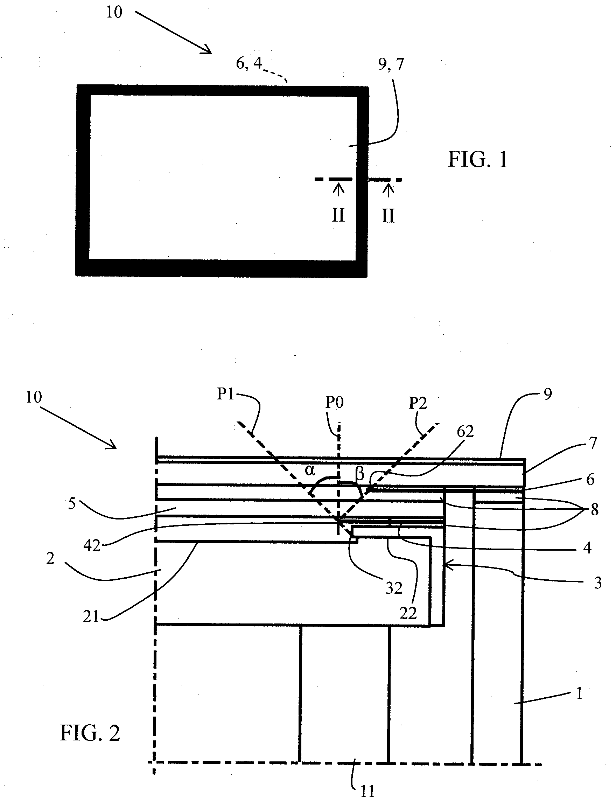

En se référant à la figure 2, le dispositif d'affichage 10 selon l'invention comprend un boîtier 1 et un écran d'affichage 2.

Le boîtier 1 est de préférence de forme sensiblement parallélépipédique, et présente des parois latérales, une paroi arrière et une paroi avant. La paroi avant du boitier 1 peut être sous la forme d'une plaque transparente 7 ou semi-transparente, par exemple d'une plaque fumée, disposée de sorte que l'affichage de l'écran d'affichage 2 soit visible par l'utilisateur à travers cette plaque transparente 7.

La plaque transparente 7 est souvent fixée aux parois latérales du boîtier 1 par exemple au moyen d'une colle 8. En particulier, la plaque transparente 7 peut être en verre, en plastique ou tout autre matériau équivalent connu de l'homme du métier. Elle peut servir à protéger les éléments du dispositif d'affichage 10, par exemple pour éviter que de la poussière s'infiltre dans le boîtier. La plaque 7 a également une fonction de rigidifier ou décorer le dispositif d'affichage selon l'invention. La plaque 7 est l'élément visible et touchable du dispositif d'affichage.

A l'intérieur du boîtier, se trouve fixé, un écran d'affichage 2. L'écran d'affichage 2 peut être un écran TFT, LCM, LCD ou OLED.

La surface avant de l'écran d'affichage 2 comprend une surface d'affichage 21 et une partie latérale 22.

De préférence, l'écran d'affichage 2 est fixé au boîtier 1 par sa face arrière. L'écran d'affichage peut également être suspendu sous la plaque 7 s'il elle est rigide, par collage ou poussé contre la plaque sous l'effet d'un élément élastique comme un ressort ou une mousse.

Un cadre latéral 3 s'étend sur une partie de la partie latérale 22 de la surface avant de l'écran d'affichage 2.

Le cadre latéral 3 peut aussi être disposé sur une des surfaces latérales de l'écran d'affichage. Le cadre latéral 3 recouvre un ensemble d'éléments techniques assurant le fonctionnement, par exemple l'adressage, de l'écran d'affichage. Ce cadre latéral 3 ou enjoliveur, généralement appelé bezel, disposé sur le pourtour de l'écran en protège les tranches.

Typiquement, le cadre latéral 3 est métallique afin, tout en restant fin, de permettre une bonne protection mécanique de l'écran d'affichage et une protection des pistes et circuits électroniques disposés sur le bord de l'écran, contre les décharges électrostatiques. Afin de ne pas agresser le verre, un joint est généralement appliqué entre le cadre latéral et la surface de l'écran.

Le dispositif d'affichage 10 comprend en outre un pavé tactile 5 disposé devant l'écran d'affichage. Le pavé tactile 5 est disposé entre l'écran d'affichage 2 et la plaque transparente 7. Le pavé tactile 5 s'étend de préférence sur l'ensemble de la surface d'affichage 21 de l'écran d'affichage. De préférence, le pavé tactile est disposé de manière fixe par rapport à l'écran d'affichage. Le pavé tactile 5 peut être de type résistif ou capacitif.

La plaque transparente 7 s'étend sur le pavé tactile 5.

Comme représenté sur la figure 2, le dispositif d'affichage 10 selon l'invention comprend un premier masque opaque 4 disposé entre le pavé tactile 5 et l'écran d'affichage 2. Le premier masque 4 est disposé de sorte à masquer une partie de la partie latérale de la surface avant de l'écran d'affichage.

De préférence, le premier masque est disposé de sorte à masquer au moins la partie de la partie latérale de la surface avant de l'écran d'affichage sur laquelle est disposée le cadre latéral 3.

On entend par « masquer une partie d'une surface » le fait de recouvrir ladite partie d'un masque opaque rendant ladite partie non visible par l'utilisateur final du dispositif d'affichage en utilisation.

Le dispositif d'affichage 10 comprend également un deuxième masque 6 disposé devant le pavé tactile et masquant la partie latérale en avant de la surface avant du pavé tactile disposée devant le premier masque 4.

Le premier masque 4 s'étend en direction du centre de la surface avant de l'écran au-delà du deuxième masque 6. Avantageusement, une telle configuration permet de masquer une partie de la surface latérale de l'écran d'affichage tout en assurant à l'utilisateur une visibilité maximum de la partie d'affichage de la face avant de l'écran d'affichage, surtout en vision de biais.

En pratique, les premier et deuxième masques du dispositif selon l'invention sont de fines couches opaques.

Selon un mode de réalisation préféré de l'invention, la surface avant de l'écran d'affichage, la surface avant du pavé tactile et les premier et deuxième masques sont sensiblement plans et parallèles entre eux. De même, la plaque transparente est de préférence plane et sensiblement parallèle à la surface avant de l'écran d'affichage.

Comme représenté sur la figure 2, selon au moins une section du dispositif d'affichage 10, le premier masque 4 s'étend en direction du centre de la surface avant de l'écran d'affichage au-delà du cadre 3, jusqu'à un premier point 42.

En particulier, comme on peut le voir sur la figure 1, selon au moins une section du dispositif d'affichage, on peut définir une droite P2 entre le point 42 du premier masque le plus proche du centre de la surface avant de l'écran d'affichage et le point 62 du deuxième masque le plus proche du centre de la surface avant de l'écran d'affichage.

La droite P2 représente une trajectoire oculaire incidente d'un utilisateur positionné de biais par rapport au dispositif d'affichage 10.

On peut également définir une droite P1 entre le point 42 du premier masque le plus proche du centre de la surface avant de l'écran d'affichage et le point 32 du cadre latéral le plus proche du centre de la surface avant de l'écran d'affichage.

De même que précédemment, la droite P1 représente une trajectoire oculaire incidente d'un utilisateur positionné de biais par rapport au dispositif d'affichage.

Selon un mode de réalisation de l'invention, le dispositif d'affichage est configuré de sorte que l'angle β entre la droite P2 et la normale P0 à la surface avant de l'écran au niveau du point 42 du premier masque le plus proche du centre de la surface avant de l'écran d'affichage soit supérieur ou égal à 0°, par exemple supérieur ou égal à 10°, par exemple supérieur ou égal à 15°, et inférieur ou égal à 55°, par exemple inférieur ou égal à 45°.

De même, selon un mode de réalisation de l'invention, le dispositif d'affichage est configuré de sorte que l'angle α entre la droite P1 et la normale P0 à la surface avant de l'écran au niveau du point 42 du premier masque le plus proche du centre de la surface avant de l'écran d'affichage soit supérieur ou égal à 10°, par exemple supérieur ou égal à 15°, et inférieur ou égal à 55°, par exemple inférieur ou égal à 45°.

Avantageusement, de telles valeurs de α et β permettent qu'un utilisateur positionné de biais ne perçoive pas les bords généralement brillants du cadre latéral 3.

De même, l'utilisateur de biais perçoit au maximum les bords de la surface d'affichage 21.

Le point 32 sera avantageusement positionné pour absorber aussi les écarts de tolérance de positionnement du premier masque 4, c'est-à-dire que le premier masque s'étendra en direction du centre de la surface avant de l'écran d'affichage un petit peu plus que nécessaire, profitant que l'image est généralement (1 à 2 mm) un tout petit peu plus petite que le bord 32 du cadre latérale 3.

Il apparaît clairement que pour obtenir le même angle α avec un unique masque placé comme le deuxième masque devant le pavé tactile, ledit masque doit s'étendre en direction du centre de l'écran davantage que le premier masque 4, masquant ainsi une partie de la surface d'affichage 21.

Ainsi, le premier masque 4 permet un masquage optimal du cadre, et le deuxième masque 6 en autorise une vision au plus des bords de la surface d'affichage 21. En particulier, le masque 4 est placé au plus près du cadre latéral 3 pour réduire le moins possible le champ de vision.

Comme l'illustre la figure 2, le pavé tactile peut être collé sur le cadre latéral au moyen d'une ou de plusieurs couches de colle 8. Il en est de même pour la plaque transparente 7 fixée sur le boîtier.

La plaque transparente 7 peut également être recouverte d'un polariseur 9 limitant les réflexions parasites sur la plaque transparente 7.

La fixation de l'écran d'affichage 2 sur le boîtier se fait ici par l'intermédiaire d'un élément de connexion 11, de préférence vissé au boîtier (non représenté).

Le premier et/ou le deuxième masque sont opaques et peuvent être de couleur grise ou noire, ou de couleurs assorties au décor, ou en contraste, ou en dégradé, pour faire apparaitre un liseré encadrant l'image.

La fabrication du dispositif selon l'invention comporte une étape au cours de laquelle on met en place le premier et le deuxième masque de sorte qu'ils soient disposés comme exposé précédemment. Selon un mode de réalisation, les masques peuvent être mis en place par sérigraphie sur vitre.

Cette méthode de sérigraphie permet de mettre en place de manière précise, reproductible et à faible coûts, un masque sous forme de fine couche sur la plaque transparente 7 et/ou le pavé tactile 5.

Bien entendu, l'invention ne se limite pas aux modes de réalisation décrits et s'étend à d'autres variantes tout en restant dans la portée des revendications.

Dans la présente, le mot «comprenant» n'exclut pas d'autres éléments, et l'article indéfini «un» ou «une» n'exclut pas une pluralité. Le simple fait que les différentes caractéristiques soient citées ensembles dans différentes revendications dépendantes n'indique pas que la combinaison de ces caractéristiques ne peut être utilisée de manière avantageuse.

Tout signe de référence dans les revendications ne doit pas être interprété comme limitant la portée de l'invention.

## Revendications

1. Dispositif d'affichage destiné notamment à un véhicule automobile comprenant :
- un écran d'affichage (2),
- un pavé tactile (5) disposé devant l'écran d'affichage,
- un cadre latéral (3) disposé sur une partie de la surface avant de l'écran d'affichage, caratérisé en ce qu'il comporte
- un premier masque opaque (4) disposé entre le pavé tactile et le cadre latéral (3) et s'étendant en direction du centre de la surface avant de l'écran d'affichage au-delà du cadre latéral de sorte à masquer ledit cadre latéral,
- un deuxième masque opaque (6) disposé devant le pavé tactile et masquant une partie latérale de la surface avant du pavé tactile disposée devant le premier masque,
dans lequel le premier masque s'étend en direction du centre de la surface avant de l'écran au-delà du deuxième masque.

2. Dispositif d'affichage selon la revendication 1, dans lequel la surface avant de l'écran d'affichage, la surface avant du pavé tactile et les premier et deuxième masques sont sensiblement plans et parallèles entre eux.

3. Dispositif d'affichage selon l'une des revendications 1 ou 2, dans lequel selon au moins une section du dispositif d'affichage, la droite (P2) reliant le point (42) du premier masque le plus proche du centre de la surface avant de l'écran d'affichage et le point (62) du deuxième masque le plus proche du centre de la surface avant de l'écran d'affichage forme avec la normale (P0) à la surface avant de l'écran au niveau du point (42) du premier masque le plus proche du centre de la surface avant de l'écran d'affichage un angle (β) supérieur ou égal à 0° et inférieur ou égal à 55°.

4. Dispositif d'affichage selon l'une des revendications 1 à 3, dans lequel selon au moins une section du dispositif d'affichage, la droite (P1) reliant le point (42) du premier masque le plus proche du centre de la surface avant de l'écran d'affichage et le point (32) du cadre latéral le plus proche du centre de la surface avant de l'écran d'affichage forme avec la normale (P0) à la surface avant de l'écran au niveau du point (42) du premier masque le plus proche du centre de la surface avant de l'écran d'affichage un angle (α) supérieur ou égal à 10° et inférieur ou égal à 55°.

5. Dispositif d'affichage selon l'une des revendications précédentes, comprenant en outre un boîtier (1) auquel l'écran d'affichage est fixé.

6. Dispositif d'affichage selon la revendication précédente, dans lequel le deuxième masque est disposé de sorte à masquer au moins une partie du boîtier.

7. Dispositif d'affichage selon l'une des revendications précédentes, dans lequel le pavé tactile est de type capacitif ou résistif.

8. Dispositif d'affichage selon l'une des revendications précédentes, comprenant en outre une plaque transparente (7) disposée sur le deuxième masque et la face avant du pavé tactile.

9. Dispositif d'affichage selon l'une des revendications précédentes, dans lequel les masques opaques sont déposés par sérigraphie sur vitre.

10. Dispositif d'affichage selon les revendications 8 et 9, dans lequel le deuxième masque opaque est déposé par sérigraphie sur la plaque transparente (7).

11. Dispositif d'affichage selon la revendication 9 ou 10, dans lequel le premier masque est déposé par sérigraphie sur la face arrière du pavé tactile.

12. Planche de bord d'un véhicule automobile comprenant un dispositif d'affichage selon l'une des revendications précédentes.

## Patentansprüche

1. Anzeigevorrichtung, welche insbesondere für ein Kraftfahrzeug bestimmt ist, umfassend:
- einen Anzeigebildschirm (2),
- ein Touchpad (5), das vor dem Anzeigebildschirm angeordnet ist,
- einen Seitenrahmen (3), der auf einem Teil der Vorderfläche des Anzeigebildschirms angeordnet ist, **dadurch gekennzeichnet, dass** sie aufweist:
- eine erste undurchsichtige Maske (4), die zwischen dem Touchpad und dem Seitenrahmen (3) angeordnet ist und sich in Richtung der Mitte der Vorderfläche des Anzeigebildschirms über den Seitenrahmen hinaus erstreckt, so dass sie den Seitenrahmen verdeckt,
- eine zweite undurchsichtige Maske (6), die vor dem Touchpad angeordnet ist und einen seitlichen Teil der Vorderfläche des Touchpads verdeckt, der vor der ersten Maske angeordnet ist,
wobei sich die erste Maske in Richtung der Mitte der Vorderfläche des Bildschirms über die zweite Maske hinaus erstreckt.

2. Anzeigevorrichtung nach Anspruch 1, wobei die Vorderfläche des Anzeigebildschirms, die Vorderfläche des Touchpads und die erste und die zweite Maske im Wesentlichen eben und parallel zueinander sind.

3. Anzeigevorrichtung nach einem der Ansprüche 1 oder 2, wobei in wenigstens einem Querschnitt der Anzeigevorrichtung die Gerade (P2), die den Punkt (42) der ersten Maske, welcher dem Mittelpunkt der Vorderfläche des Anzeigebildschirms am nächsten ist, und den Punkt (62) der zweiten Maske, welcher dem Mittelpunkt der Vorderfläche des Anzeigebildschirms am nächsten ist, verbindet, mit der Normalen (P0) zur Vorderfläche des Bildschirms im Punkt (42) der ersten Maske, welcher dem Mittelpunkt der Vorderfläche des Anzeigebildschirms am nächsten ist, einen Winkel (β) bildet, der größer oder gleich 0° und kleiner oder gleich 55° ist.

4. Anzeigevorrichtung nach einem der Ansprüche 1 bis 3, wobei in wenigstens einem Querschnitt der Anzeigevorrichtung die Gerade (P1), die den Punkt (42) der ersten Maske, welcher dem Mittelpunkt der Vorderfläche des Anzeigebildschirms am nächsten ist, und den Punkt (32) des Seitenrahmens, welcher dem Mittelpunkt der Vorderfläche des Anzeigebildschirms am nächsten ist, verbindet, mit der Normalen (P0) zur Vorderfläche des Bildschirms im Punkt (42) der ersten Maske, welcher dem Mittelpunkt der Vorderfläche des Anzeigebildschirms am nächsten ist, einen Winkel (α) bildet, der größer oder gleich 10° und kleiner oder gleich 55° ist.

5. Anzeigevorrichtung nach einem der vorhergehenden Ansprüche, welche außerdem ein Gehäuse (1) umfasst, an welchem der Anzeigebildschirm befestigt ist.

6. Anzeigevorrichtung nach dem vorhergehenden Anspruch, wobei die zweite Maske so angeordnet ist, dass sie wenigstens einen Teil des Gehäuses verdeckt.

7. Anzeigevorrichtung nach einem der vorhergehenden Ansprüche, wobei das Touchpad vom kapazitiven oder resistiven Typ ist.

8. Anzeigevorrichtung nach einem der vorhergehenden Ansprüche, welche außerdem eine transparente Platte (7) umfasst, die auf der zweiten Maske und der Vorderseite des Touchpads angeordnet ist.

9. Anzeigevorrichtung nach einem der vorhergehenden Ansprüche, wobei die undurchsichtigen Masken durch Siebdruck auf Glas aufgebracht werden.

10. Anzeigevorrichtung nach den Ansprüchen 8 und 9, wobei die zweite undurchsichtige Maske durch Siebdruck auf die transparente Platte (7) aufgebracht wird.

11. Anzeigevorrichtung nach Anspruch 9 oder 10, wobei die erste Maske durch Siebdruck auf die Rückseite des Touchpads aufgebracht wird.

12. Armaturenbrett eines Kraftfahrzeugs, welches eine Anzeigevorrichtung nach einem der vorhergehenden Ansprüche umfasst.

## Claims

1. Display device especially intended for an automotive vehicle, comprising:
- a display screen (2),
- a touch panel (5) placed in front of the display screen,
- a lateral frame (3) placed on a portion of the front surface of the display screen,
**characterized in that** it includes
- a first opaque mask (4) placed between the touch panel and the lateral frame (3) and extending in the direction of the centre of the front surface of the display screen beyond the lateral frame so as to mask said lateral frame,
- a second opaque mask (6) placed in front of the touch panel and masking a lateral portion of the front surface of the touch panel placed in front of the first mask,
wherein the first mask extends in the direction of the centre of the front surface of the screen beyond the second mask.

2. Display device according to Claim 1, wherein the front surface of the display screen, the front surface of the touch panel and the first and second masks are substantially plane and parallel to one another.

3. Display device according to either of Claims 1 and 2, wherein, in at least one section of the display device, the straight line (P2) connecting the point (42) of the first mask closest the centre of the front surface of the display screen and the point (62) of the second mask closest the centre of the front surface of the display screen makes with the normal (P0) to the front surface of the screen at the point (42) of the first mask closest the centre of the front surface of the display screen an angle (β) larger than or equal to 0° and lower than or equal to 55°.

4. Display device according to one of Claims 1 to 3, wherein, in at least one section of the display device, the straight line (P1) connecting the point (42) of the first mask closest the centre of the front surface of the display screen and the point (32) of the lateral frame closest the centre of the front surface of the display screen makes with the normal (P0) to the front surface of the screen at the point (42) of the first mask closest the centre of the front surface of the display screen an angle (α) larger than or equal to 10° and lower than or equal to 55°.

5. Display device according to one of the preceding claims, furthermore comprising a casing (1) to which the display screen is fastened.

6. Display device according to the preceding claim, wherein the second mask is placed so as to mask at least one portion of the casing.

7. Display device according to one of the preceding claims, wherein the touch panel is of capacitive or resistive type.

8. Display device according to one of the preceding claims, furthermore comprising a transparent sheet (7) placed on the second mask and the front face of the touch panel.

9. Display device according to one of the preceding claims, wherein the opaque masks are deposited by screen printing on glass.

10. Display device according to Claims 8 and 9, wherein the second opaque mask is deposited by screen printing on the transparent sheet (7).

11. Display device according to Claim 9 or 10, wherein the first mask is deposited by screen printing on the back face of the touch panel.

12. Dashboard of an automotive vehicle comprising a display device according to one of the preceding claims.
